# EUROPEAN PATENT APPLICATION

(11) **EP 3 441 294 A1**
(43) Date of publication of application: **13.02.2019**
(21) Application number: 18186307.7
(22) Date of filing: 30.07.2018
(51) Int. Cl.: B62K 23/02

(54) **BICYCLE COMPONENT COMPRISING A REMOVABLE CLAMPING DEVICE FOR FIXING TO A TUBULAR ELEMENT OF THE BICYCLE**

(30) Priority: 07.08.2017 IT 201700090937
(71) Applicant: Campagnolo S.r.l., 36100 Vicenza (VI) (IT)
(72) Inventor: MARANGON, Christian, I-36016 THIENE (VI) (IT); MINTO, Marco, I-30035 MIRANO (VE) (IT)
(74) Representative: Porta, Checcacci & Associati S.p.A

(57) **Abstract**

The invention relates to a bicycle component (10) comprising a main body (12) and a removable clamping device (20) for fixing to a tubular element of the bicycle, wherein the removable clamping device (20) comprises a plurality of clamping segments (30, 32, 34, 36) configured to be arranged around the entire circumference of the tubular element of the bicycle and to be removably clamped onto it. There are at least three clamping segments (30, 32, 34, 36), connected together in succession in pairs by at least three connection systems, wherein the connection systems comprise at least one hinge (31, 33, 35) and at least one removable fastener (40).

## Description

The present invention relates to a bicycle component comprising a removable clamping device for fixing to a tubular element of the bicycle. The bicycle component comprises a main body having a rear surface configured to be associated with the tubular element.

The invention has a preferred application in the field of racing bicycles.

In the rest of the description and claims reference will be made to the non-limiting examples of a bicycle component such as a control assembly of bicycle handlebars, to be associated with a tubular element such as a handlebar tube, and a derailleur, to be associated with a tubular element such as a tube of the frame, in particular with the seat tube of the frame (i.e. that which supports the saddle tube of the bicycle at the top).

In order to associate the aforementioned bicycle component with the tubular element of the bicycle, a removable clamping device is used, which typically comprises an annular strap element, fixed to the main body of the bicycle component and wrapping around the tubular element of the bicycle. The strap, typically metallic, is clamped through the screwing of a nut on a screw, so as to securely tighten together two substantially facing end portions of the strap.

The mounting operations of the aforementioned bicycle component include the positioning of the screw and the screwing of the nut, and take a certain amount of time.

US 2015/0096402 and US 2015/0000452 show removable clamping devices that comprise an annular element able to be clamped through a screw.

The technical problem at the basis of the present invention is that of providing a bicycle component comprising a removable clamping device for fixing to a tubular element of the bicycle, which ensures quick mounting and dismounting of the bicycle component from the tubular element of the bicycle, at the same time ensuring secure and reliable clamping.

The present invention therefore relates to a bicycle component comprising a main body and a removable clamping device for fixing to a tubular element of the bicycle, wherein the removable clamping device comprises a plurality of clamping segments configured to be arranged around the entire circumference of the tubular element of the bicycle and to be removably clamped onto it, characterized in that there are at least three clamping segments, connected together in succession in pairs by at least three connection systems, wherein the connection systems comprise at least one hinge and at least one removable fastener.

Advantageously, the aforementioned removable clamping device makes it possible to obtain quick mounting and dismounting of the bicycle component from the tubular element of the bicycle, through the clamping of the at least three clamping segments through the at least one removable fastener. In particular, the clamping is provided by the fastening of the at least one removable fastener between two clamping segments in succession. Such clamping has proven secure and reliable.

Preferably, the connection systems define hinging axes, parallel to one another along a direction according to which the tubular element is intended to be arranged when the bicycle component is fixed thereto, the hinging axes comprising a stable hinging axis for every hinge and a virtual hinging axis for every removable fastener. Under the expression virtual hinging it is meant that there is a hinging axis only when the fastening is closed, whereas the hinging axis disappears when the fastening is open, with its parts separated from one another.

In accordance with preferred features of the invention, the clamping device is capable of taking up at least three configurations:
i) a clamped configuration, wherein:
   the removable fastener is closed and the clamping segments are arranged in succession substantially defining a minimum closed line,
   the hinging axes are all arranged close to such a minimum closed line, and
   the clamping device is clamped when applied to the tubular element;
ii) an open configuration, wherein:
   the removable fastener is open and the clamping segments are arranged at least partially far from the minimum closed line,
   at least one of the hinging axes is far from the minimum closed line, and
   the clamping device can be positioned around the tubular element;
iii) an intermediate configuration, wherein:
   the removable fastener is closed and the clamping segments are arranged at least partially far from the minimum closed line,
   at least one of the hinging axes is far from the minimum closed line, and
   the clamping device is not clamped when applied to the tubular element.

Preferably, in a clamped configuration of the clamping device, when the bicycle component is fixed to the tubular element of the bicycle, there is surface abutment of the clamping device and of a rear surface of the main body at the tubular element.

Advantageously, the surface abutment at the tubular element increases the friction and stably locks the bicycle component on the tubular element.

Preferably, in a clamped configuration of the clamping device, one of the clamping segments is arranged at least partially juxtaposed over an adjacent clamping segment.

Advantageously, such a juxtaposed clamping segment has the effect of tightening the remaining clamping segments around the tubular element.

In an embodiment of the invention, the clamping segment arranged at least partially juxtaposed is rested on the adjacent clamping segment.

In another embodiment of the invention, the clamping segment arranged at least partially juxtaposed is at least partially recessed in a seat formed in the adjacent clamping segment.

Advantageously, in the latter case, the external space occupied by the clamping device is extremely small.

Preferably, the clamping segment arranged at least partially juxtaposed comprises an actuating end portion.

Preferably, at least one of the clamping segments is fixed to the main body of the bicycle component.

In a preferred embodiment of the invention, at least one of the clamping segments has adjustable length.

Advantageously, in this way it is possible to adjust the clamping force of the clamping segments around the tubular element.

Preferably, the at least one of the clamping segments with adjustable length comprises a screw/nut screw coupling between two parts thereof.

Preferably, one of the clamping segments has a fastening end portion comprising a plurality of hooks.

Advantageously, in this way it is possible to possibly adapt the clamping device to tubular elements of different size, as well as to adjust the clamping force of the clamping segments around the tubular element.

In a first preferred embodiment of the invention, there are three clamping segments, there are two hinges and there is one removable fastener, wherein:
a first of the three clamping segments is fixed to the main body of the bicycle component, extending for an arc between a first end and a second end opposite the first, provided at the first end with a hook, part of the removable fastener;
a second of the three clamping segments, extending between a first end and a second end opposite the first, connected to the first clamping segment through a first of the two hinges, arranged at the second end of the first clamping segment and at the first end of the second clamping segment;
a third of the three clamping segments, extending for an arc between a first end and a second end opposite the first, connected to the second clamping segment through a second of the two hinges, arranged at the second end of the second clamping segment and at an intermediate area of the third clamping segment, and provided at the second end with a counter-hook, part of the removable fastener.

In a second preferred embodiment of the invention, there are five clamping segments, there are at least three hinges and there is one removable fastener, wherein:
a first of the five clamping segments is fixed to the main body of the bicycle component, extending for an arc between a first end and a second end opposite the first, provided at the first end with a hook, part of the removable fastener;
a second of the five clamping segments, extending between a first end and a second end opposite the first, connected to the first clamping segment through a first of the at least three hinges, arranged at the second end of the first clamping segment and at the first end of the second clamping segment;
a third of the five clamping segments, extending for an arc between a first end and a second end opposite the first, connected to the second clamping segment through a second of the at least three hinges, arranged at the second end of the second clamping segment and at the second end of the third clamping segment;
a fourth of the five clamping segments, extending for an arc between a first end and a second end opposite the first, connected to the third clamping segment at an intermediate area of the third clamping segment;
a fifth of the five clamping segments, extending between a first end and a second end opposite the first, connected to the fourth clamping segment through a third of the at least three hinges, arranged at the second end of the fourth clamping segment and at the first end of the fifth clamping segment, and provided at the second end with a counter-hook, part of the removable fastener.

Preferably, the at least three hinges comprise a fourth hinge, between the third and the fourth clamping segment.

More preferably, the bicycle component according to the invention comprises:
a perforated bush fixed to the third clamping segment at its intermediate area;
a threaded head of the first end of the fourth clamping segment, inserted through the perforated bush;
a threaded nut in adjustable screwing engagement on the threaded head so as to keep it engaged with the perforated bush.

Even more preferably, the at least three hinges comprise a fourth hinge, between the third clamping segment and the perforated bush.

In a third preferred embodiment of the invention, there are four clamping segments, there are at least three hinges and there is one removable fastener, wherein:
a first of the four clamping segments is fixed to the main body of the bicycle component, extending for an arc between a first end and a second end opposite the first, provided at the first end with a series of hooks, part of the removable fastener;
a second of the four clamping segments, extending between a first end and a second end opposite the first, connected to the first clamping segment through a first of the three hinges, arranged at the second end of the first clamping segment and at the second end of the second clamping segment;
a third of the four clamping segments, extending for an arc between a first end and a second end opposite the first, connected to the second clamping segment through a second of the at least three hinges, arranged at the second end of the third clamping segment and at an intermediate area of the second clamping segment;
a fourth of the four clamping segments, extending for an arc between a first end and a second end opposite the first, connected to the third clamping segment through a third of the three hinges, arranged at the second end of the third clamping segment and at the first end of the fourth clamping segment, and provided at the second end with a counter-hook part of the removable fastener.

Preferably, the component is a control assembly of bicycle handlebars or the component is a derailleur.

Further features and advantages of the invention will become clearer from the description of preferred embodiments thereof, made with reference to the attached drawings, where:
- figure 1 is a schematic perspective view of a first preferred embodiment of a control assembly of bicycle handlebars, comprising a removable clamping device for fixing to a tubular element of the bicycle, in accordance with the present invention;
- figure 2 is a schematic perspective view of the removable clamping device of figure 1, in an open configuration;
- figure 3 is a schematic perspective view of the removable clamping device of figure 1, in a clamped configuration;
- figure 4 is a schematic perspective view of the removable clamping device of figure 1, in an open configuration, taken from a different point of view with respect to figure 2;
- figure 5 is a schematic perspective view of the removable clamping device of figure 1, in a clamped configuration, taken from a different point of view with respect to figure 3;
- figure 6 is a schematic plan view of the removable clamping device of figure 1, in an open configuration;
- figure 7 is a schematic plan view of the removable clamping device of figure 1, in a clamped configuration;
- figure 8 is a schematic perspective view of a first preferred embodiment of a bicycle derailleur, comprising a removable clamping device for fixing to a tubular element of the bicycle (also shown), in accordance with the present invention;
- figure 9 is a schematic perspective view of the bicycle derailleur of figure 8, taken from a different point of view with respect to figure 8;
- figure 10 is a schematic perspective view of a part of the bicycle derailleur of figure 8;
- figure 11 is a schematic perspective view of the removable clamping device of figure 8, in an open configuration;
- figure 12 is a schematic perspective view of the removable clamping device of figure 8, in a clamped configuration;
- figure 13 is a schematic plan view of the removable clamping device of figure 8, in an open configuration;
- figure 14 is a schematic plan view of the removable clamping device of figure 8, in a clamped configuration;
- figure 15 is a schematic perspective view of a second preferred embodiment of a control assembly of bicycle handlebars, comprising a removable clamping device for fixing to a tubular element of the bicycle, in accordance with the present invention;
- figure 16 is a schematic perspective view of the removable clamping device of figure 15, in an open configuration;
- figure 17 is a schematic perspective view of the removable clamping device of figure 15, in a clamped configuration;
- figure 18 is a schematic perspective view of the control assembly of bicycle handlebars of figure 15, taken from a different point of view with respect to figure 15;
- figure 19 is a schematic perspective view of the removable clamping device of figure 18, in an open configuration;
- figure 20 is a schematic perspective view of the removable clamping device of figure 18, in a clamped configuration;
- figure 21 is a schematic plan view of the removable clamping device of figure 15, in a clamped configuration;
- figure 22 is a schematic plan view of the removable clamping device of figure 15, in an open configuration;
- figure 23 is a schematic perspective view of a second preferred embodiment of a bicycle derailleur, comprising a removable clamping device for fixing to a tubular element of the bicycle (also shown), in accordance with the present invention;
- figure 24 is a schematic perspective view of the bicycle derailleur of figure 23, taken from a different point of view with respect to figure 23;
- figure 25 is a schematic perspective view of the removable clamping device of figure 23, in a clamped configuration;
- figure 26 is a schematic perspective view of the removable clamping device of figure 23, in an intermediate configuration;
- figure 27 is a schematic plan view of the removable clamping device of figure 23, in a clamped configuration;
- figure 28 is a schematic plan view of the removable clamping device of figure 23, in an intermediate configuration;
- figure 29 is a schematic perspective view of a third preferred embodiment of a control assembly of bicycle handlebars, comprising a removable clamping device for fixing to a tubular element of the bicycle, in accordance with the present invention;
- figure 30 is a schematic perspective view of the removable clamping device of figure 29, in an open configuration;
- figure 31 is a schematic perspective view of the removable clamping device of figure 29, in a clamped configuration;
- figure 32 is a schematic perspective view of the control assembly of bicycle handlebars of figure 29, taken from a different point of view with respect to figure 29;
- figure 33 is a schematic perspective view of the removable clamping device of figure 32, in an open configuration;
- figure 34 is a schematic perspective view of the removable clamping device of figure 32, in a clamped configuration;
- figure 35 is a schematic plan view of the removable clamping device of figure 29, in a clamped configuration;
- figure 36 is a schematic plan view of the removable clamping device of figure 29, in an open configuration;
- figure 37 is a schematic perspective view of a third preferred embodiment of a bicycle derailleur, comprising a removable clamping device for fixing to a tubular element of the bicycle (also shown), in accordance with the present invention;
- figure 38 is a schematic perspective view of the bicycle derailleur of figure 37, taken from a different point of view with respect to figure 37;
- figure 39 is a schematic plan view of the removable clamping device of figure 37, in a clamped configuration;
- figure 40 is a schematic plan view of the removable clamping device of figure 37, in an intermediate configuration;
- figure 41 is a schematic plan view of the removable clamping device of figure 37, in an open configuration;
- figure 42 is a schematic perspective view of the removable clamping device of figure 37, in a clamped configuration;
- figure 43 is a schematic perspective view of the removable clamping device of figure 37, in an intermediate configuration;
- figure 44 is a schematic perspective view of the removable clamping device of figure 37, in an open configuration.

In the figures, preferred embodiments of the invention are shown, some referring to a control assembly of handlebars, others referring to a derailleur. In particular, reference numerals 10, 210 and 410 indicate three preferred embodiments of a control assembly of handlebars in accordance with the present invention, whereas reference numerals 110, 310 and 510 indicate three preferred embodiments of a derailleur in accordance with the present invention.

The control assembly of handlebars 10, 210, 410 and the bicycle derailleur 110, 310, 510 will also be indicated with the general term "bicycle component" in accordance with the present invention. Of course, the type of the specific bicycle component is not relevant for the purposes of the invention and therefore the features described hereinafter with specific reference to each of the aforementioned embodiments can be adopted for a control of handlebars, for a derailleur, and for other component.

The bicycle component is intended to be fixed to a tubular element of the bicycle.

In the embodiments wherein the bicycle component is a control assembly of bicycle handlebars, the tubular element is a tube of the bicycle handlebars.

In the embodiments wherein the bicycle component is a bicycle derailleur, the tubular element is a seat tube of the frame (i.e. that which supports the saddle tube of the bicycle at the top).

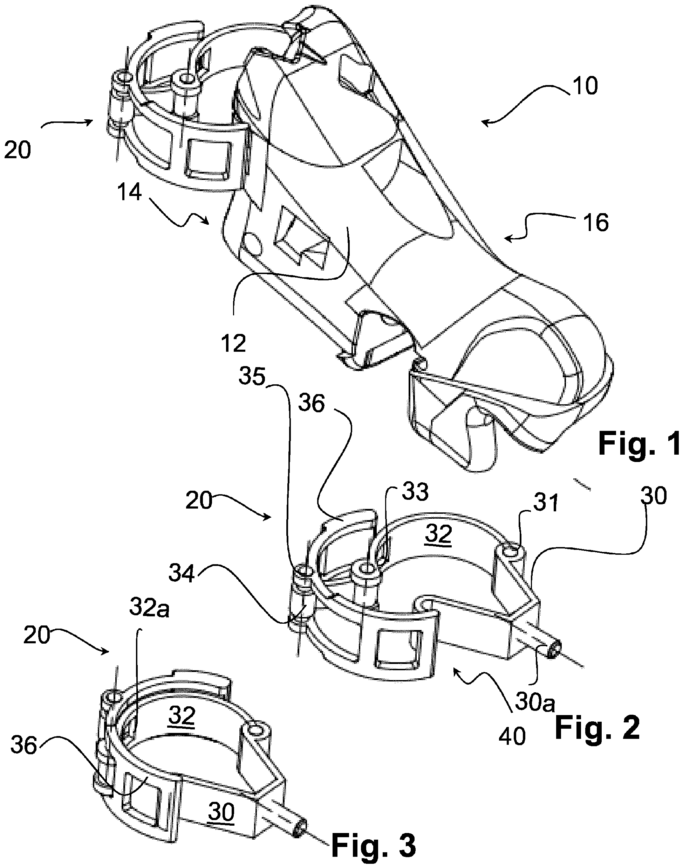

With initial reference to the attached figures 1-7, reference numeral 10 indicates a first preferred embodiment of a control assembly of bicycle handlebars in accordance with the present invention.

As illustrated in figure 1, the bicycle component 10 comprises a removable clamping device 20 for fixing to the tubular element (not illustrated) of the bicycle.

A main body 12 of the bicycle component 10 has a rear surface 14 configured to be associated with the tubular element and an opposite front surface 16.

The removable clamping device 20 comprises a plurality of clamping segments configured to be arranged around the entire circumference of the tubular element of the bicycle and to be removably clamped on it.

The clamping segments are connected together in succession in pairs by connection systems, wherein the connection systems comprise hinges and a removable fastener 40.

The connection systems define hinging axes, parallel to one another along a direction according to which the tubular element is intended to be arranged when the bicycle component 10 is fixed thereto; the hinging axes comprise a stable hinging axis for every hinge and a virtual hinging axis for the removable fastener 40.

In particular, in this embodiment of the invention, there are four clamping segments, indicated with 30, 32, 34 and 36, and there are three hinges, indicated with 31, 33 and 35.

The clamping segment 30 is fixed to the main body 12 of the bicycle component, through a pin 30a that is preferably externally threaded, or through a screw screwed into an axial cavity of such a pin, without external threading. As an alternative to the threaded connection just described, the clamping segment 30 can be fixed to the main body 12 through overmolding.

The clamping segment 30 is substantially V-shaped, with a first end portion, at which the hinge 31 is provided, and a second opposite end portion where a hook 40a is provided that forms part of the removable fastener 40.

The clamping segment 32 extends for an arc between a first end portion and a second end portion opposite the first, provided at the opposite end portions with the hinges 31 and 33, respectively.

The clamping segment 34 extends between a first end portion and a second end portion opposite the first, and is connected to the clamping segment 32 through the hinge 33, arranged at the second end portion of the clamping segment 32 and at the first end portion of the clamping segment 34.

The clamping segment 36 extends for an arc between a first end portion and a second end portion opposite the first, and is connected to the clamping segment 34 through the hinge 35, arranged at the second end portion of the clamping segment 34 and at an intermediate area of the clamping segment 36. The clamping segment 36 is provided at the second end portion with a counter-hook 40b, which forms part of the removable fastener 40.

The clamping device 20 is capable of taking up at least three configurations.

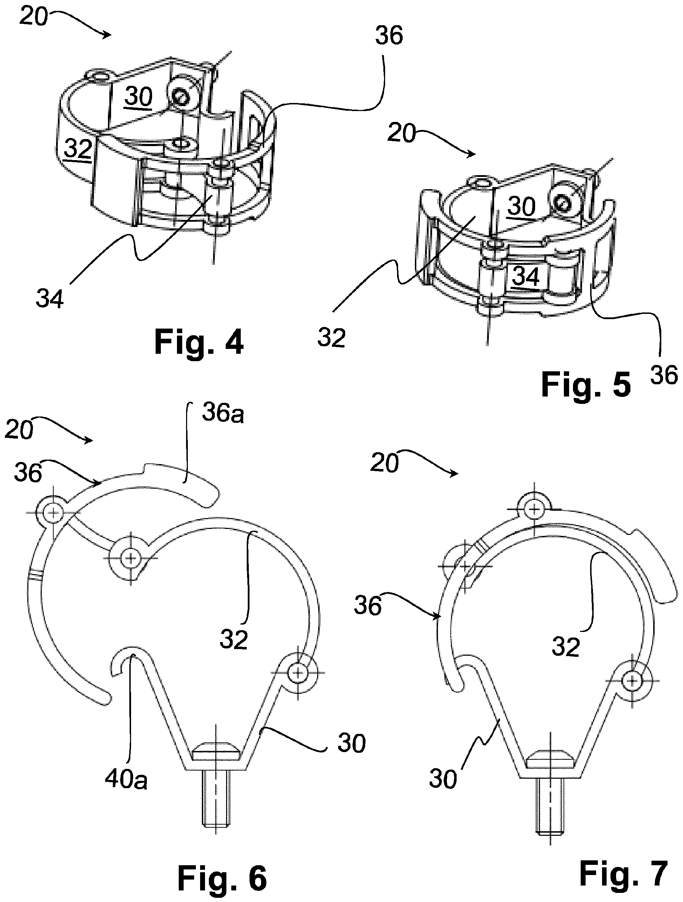

A first configuration is a clamped configuration (figures 3, 5 and 7), wherein the removable fastener 40 is closed and the clamping segments 30, 32, 34 and 36 are arranged in succession substantially defining a minimum closed line (fig. 7), the hinging axes are all arranged close to such a minimum closed line, and the clamping device 20 is clamped when applied to the tubular element;

A second configuration is an open configuration (figures 2, 4 and 6), wherein the removable fastener 40 is open and the clamping segments 30, 32, 34 and 36 are arranged at least partially far from the minimum closed line, at least one of the hinging axes is far from the minimum closed line, and the clamping device 20 can be positioned around the tubular element;

A third configuration is an intermediate configuration (not illustrated in the figures but obvious from what has been described), wherein the removable fastener 40 is closed and the clamping segments 30, 32, 34 and 36 are arranged at least partially far from the minimum closed line, at least one of the hinging axes is far from the minimum closed line, and the clamping device 20 is not clamped when applied to the tubular element.

In the clamped configuration of the clamping device 20, when the bicycle component is fixed to the tubular element of the bicycle, there is surface abutment of the clamping device 20 and of the rear surface 14 of the main body 12 at the tubular element.

In the clamped configuration of the clamping device 20, the clamping segment 34 is arranged at least partially juxtaposed over the clamping segment 32.

The clamping segment 34 arranged at least partially juxtaposed is at least partially recessed in a seat 32a formed in the clamping segment 32.

The clamping segment 36 comprises an actuating end portion 36a.

The ways of using the clamping device 20 of the component 10 are clear from what has been described. In order to fix the component 10 to the tubular element of the bicycle, it is necessary to bring the clamping device 20 into its open configuration and arrange it around the tubular element so as to embrace it; at this point, the fastener 40 is closed (by fastening the hook 40a to the counter-hook 40b), reaching the intermediate configuration; finally, by acting on the end 36a of the clamping segment 36 in the direction to take the latter above and against the clamping segment 34 and this in turn above and against the clamping segment 32, the clamping condition is reached. At this point, the component 10 is locked on the tubular element of the bicycle in a secure and stable manner.

If it is wished to then dismount the component 10 from the tubular element of the bicycle, it is sufficient to carry out the previous operations in reverse.

As can be seen, both the mounting and the dismounting are simple and quick.

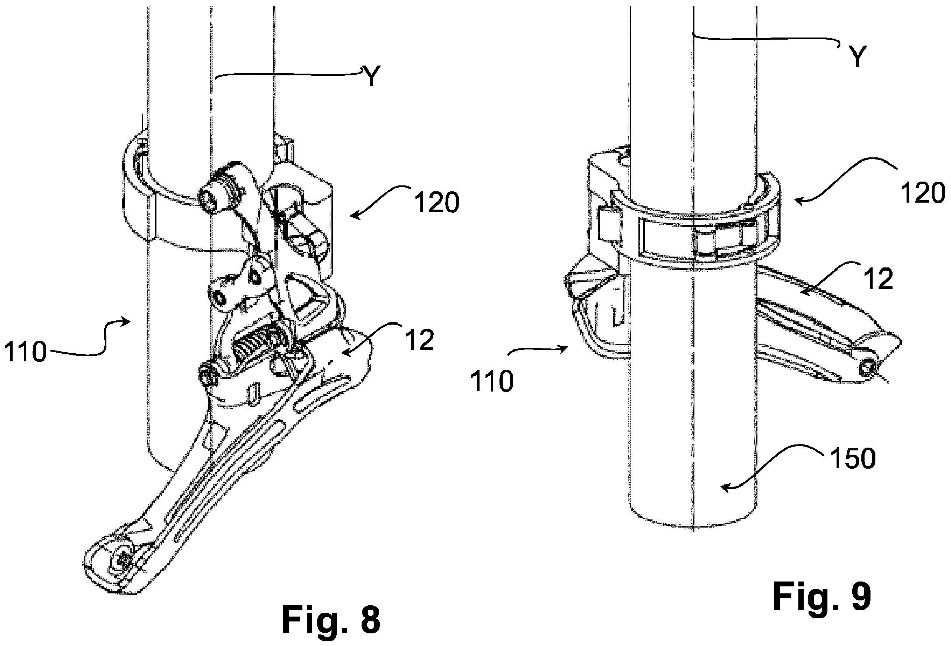

A first preferred embodiment of a bicycle derailleur 110 in accordance with the invention is illustrated in figures 8-14, in which elements structurally or functionally equivalent to those already described with reference to the first embodiment of the control assembly of bicycle handlebars 10 of the invention are indicated with the same reference numeral.

In this preferred embodiment, the derailleur 110 is fixed to a tubular element 150 of the bicycle, in particular to the seat tube of the frame.

As illustrated in figures 8 and 9, the bicycle component 110 comprises a removable clamping device 120 for fixing to the tubular element 150.

The removable clamping device 120 comprises a plurality of clamping segments configured to be arranged around the entire circumference of the tubular element 150 and to be removably clamped on it.

The clamping segments are connected together in succession in pairs by connection systems, wherein the connection systems comprise hinges and a removable fastener 40.

The connection systems define hinging axes, parallel to one another along the direction Y according to which the tubular element 150 is arranged when the bicycle component 110 is fixed thereto; these axes comprise a stable hinging axis for every hinge and a virtual hinging axis for the removable fastener 40.

In particular, in this embodiment of the invention, there are three clamping segments, indicated with 130, 132 and 134, and there are two hinges, indicated with 131 and 133.

The clamping segment 130 is fixed to the main body 12 of the bicycle component, at an appendage portion 130b thereof, equipped with a hole 130c. The hole 130c is passed through by a fixing screw to the main body 12.

The clamping segment 130 extends for an arc between a first end portion and a second end portion opposite the first, a hook 40a that forms part of the removable fastener 40 being provided at the first end portion.

The clamping segment 132 extends between a first end portion and a second end portion opposite the first, connected to the clamping segment 130 through a hinge 131, arranged at the second end portion of the clamping segment 130 and at the first end portion of the clamping segment 132.

The clamping segment 134 extends for an arc between a first end portion and a second end portion opposite the first, and is connected to the clamping segment 132 through the hinge 133, arranged at the second end portion of the clamping segment 132 and at an intermediate area of the clamping segment 134. The clamping segment 134 is provided at the second end portion with a counter-hook 40b, which forms part of the removable fastener 40.

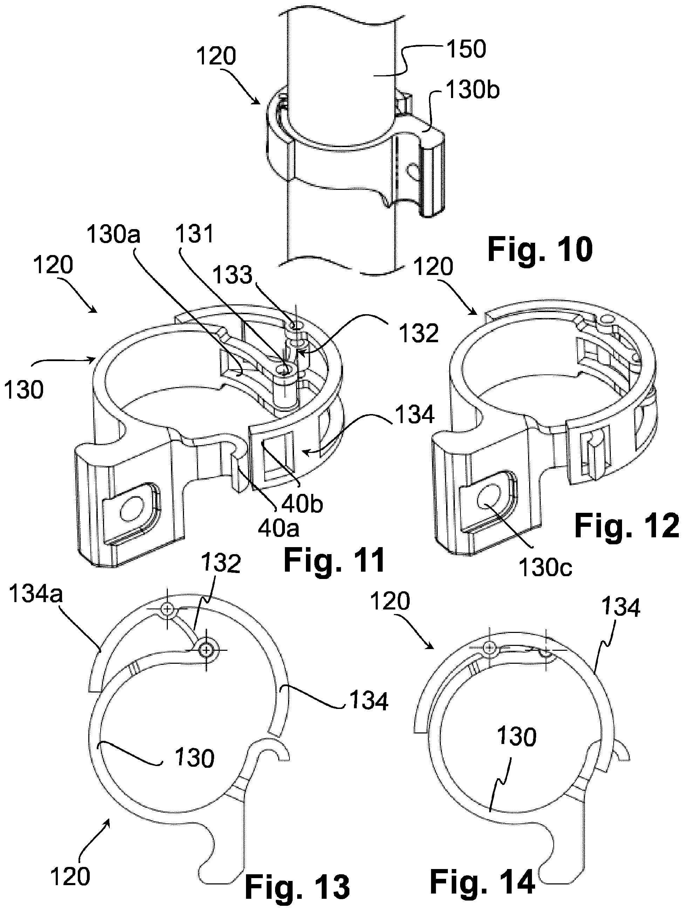

The clamping device 120 is capable of taking up at least three configurations:
A first configuration is a clamped configuration (figures 8, 9, 10, 12 and 14), wherein the removable fastener 40 is closed and the clamping segments 130, 132 and 134 are arranged in succession substantially defining a minimum closed line, the hinging axes are all arranged close to such a minimum closed line, and the clamping device 120 is clamped when applied to the tubular element;
A second configuration is an open configuration (figures 11 and 13), wherein the removable fastener 40 is open and the clamping segments 130, 132 and 134 are arranged at least partially far from the minimum closed line, at least one of the hinging axes is far from the minimum closed line, and the clamping device 120 can be positioned around the tubular element.
A third configuration is an intermediate configuration (not illustrated in the figures but obvious from what has been described), wherein the removable fastener 40 is closed and the clamping segments 130, 132 and 134 are arranged at least partially far from the minimum closed line, at least one of the hinging axes is far from the minimum closed line, and the clamping device 120 is not clamped when applied to the tubular element.

In the clamped configuration of the clamping device 120, the clamping segment 132 is arranged at least partially juxtaposed over the clamping segment 130.

The clamping segment 132 arranged at least partially juxtaposed is at least partially recessed in a seat 130a formed in the clamping segment 130.

The clamping segment 134 comprises an actuating end portion 134a.

The ways of using the clamping device 120 of the component 110 are clear from what has been described. In order to fix the component 110 to the tubular element of the bicycle, it is necessary to bring the clamping device 120 into its open configuration and to arrange it around the tubular element so as to embrace it; at this point, the fastener 40 is closed (by fastening the hook 40a to the counter-hook 40b), reaching the intermediate configuration; finally, by acting on the clamping segment 134 in the direction to take it above and against the clamping segment 132 and this above and against the clamping segment 130, the clamping condition is reached. At this point, the component 110 is locked on the tubular element of the bicycle in a secure and stable manner.

If it is then wished to dismount the component 110 from the tubular element of the bicycle, it is sufficient to carry out the previous operations in reverse.

As can be seen, both the mounting and the dismounting are simple and quick.

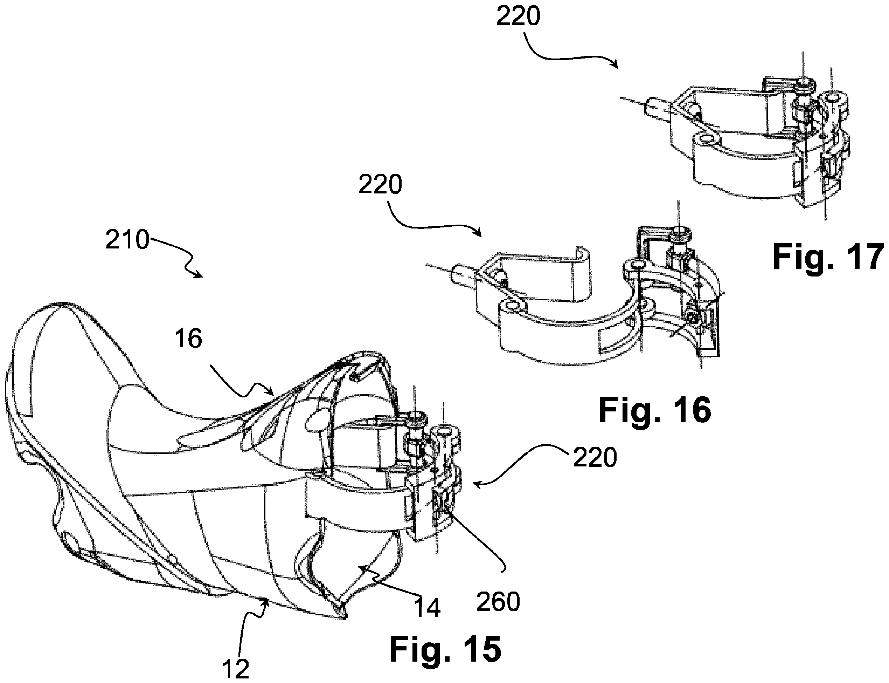

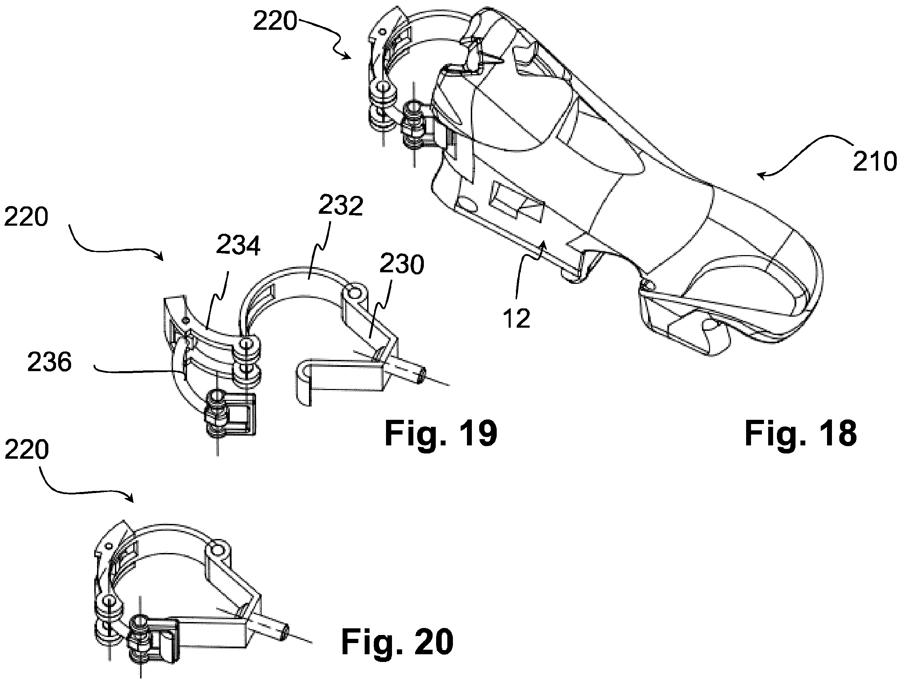

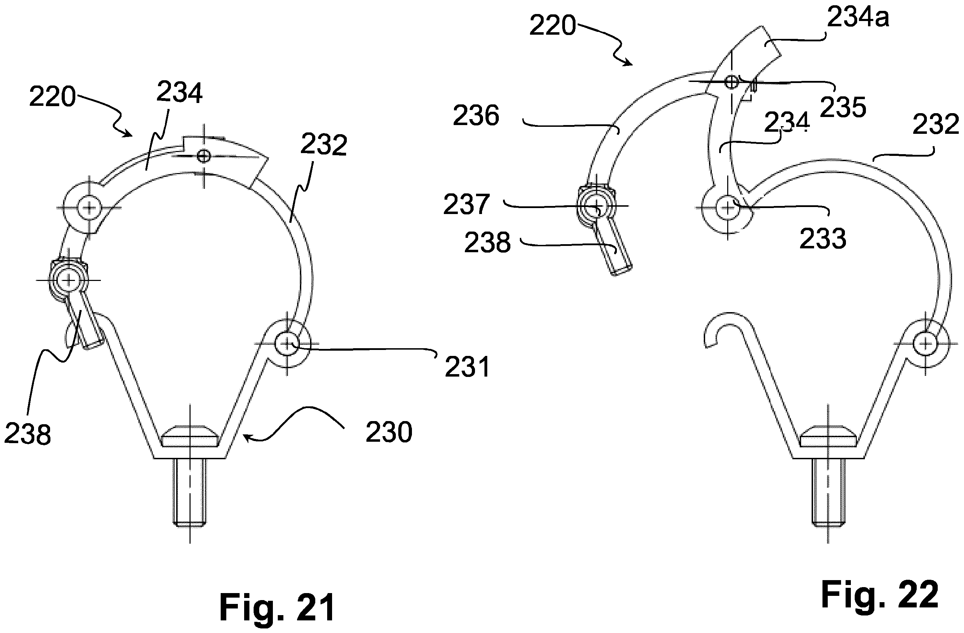

A second preferred embodiment of the control assembly of bicycle handlebars 210 in accordance with the invention is illustrated in figures 15-22, in which elements structurally or functionally equivalent to those already described with reference to the prima embodiment of the control assembly of bicycle handlebars 10 of the invention of figures 1-7 are indicated with the same reference numeral.

As illustrated in figure 15, the bicycle component 210 comprises a removable clamping device 220 for fixing to the tubular element (not illustrated) of the bicycle.

A main body 12 of the bicycle component 210 has a rear surface 14 configured to be associated with the tubular element and an opposite front surface 16.

The removable clamping device 220 comprises a plurality of clamping segments configured to be arranged around the entire circumference of the tubular element of the bicycle and to be removably clamped on it.

The clamping segments are connected together in succession in pairs by connection systems, wherein the connection systems comprise hinges and a removable fastener 40.

The connection systems define hinging axes, parallel to one another along a direction according to which the tubular element is intended to be arranged when the bicycle component 210 is fixed thereto; the hinging axes comprise a stable hinging axis for every hinge and a virtual hinging axis for the removable fastener 40.

In particular, in this embodiment of the invention, there are five clamping segments, indicated with 230, 232, 234, 236 and 238, and there are four hinges, indicated with 231, 233, 235 and 237.

The clamping segment 230 is fixed to the main body 12 of the bicycle component, through a pin 30a that is preferably externally threaded, or through a screw screwed into an axial cavity of such a pin, without external threading. As an alternative to the threaded connection just described, the clamping segment 30 can be fixed to the main body 12 through overmolding.

The clamping segment 230 is substantially V-shaped, with a first end portion, at which the hinge 231 is provided, and a second opposite end portion where a hook 40a that forms part of the removable fastener 40 is provided.

The clamping segment 232 extends for an arc between a first end portion and a second end portion opposite the first, provided at the opposite end portions with the hinges 231 and 233, respectively.

The clamping segment 234 extends between a first end portion and a second end portion opposite the first, and is connected to the clamping segment 232 through the hinge 233, arranged at the second end portion of the clamping segment 232 and at the first end portion of the clamping segment 234.

The clamping segment 236 extends for an arc between a first end portion and a second end portion opposite the first, and is connected to the clamping segment 234 through a hinge 235, arranged at an intermediate area of the clamping segment 234 and at the first end portion of the clamping segment 236.

The clamping segment 238 extends between a first end portion and a second end portion opposite the first, and is connected to the clamping segment 236 through a hinge 237, arranged at the second end portion of the clamping segment 236 and at the first end portion of the clamping segment 238. The clamping segment 238 is provided at the second end portion with a counter-hook 40b that forms part of the removable fastener 40.

The clamping device 220 is capable of taking up at least three configurations.

A first configuration is a clamped configuration (figures 15, 17, 18, 20 and 21), wherein the removable fastener 40 is closed and the clamping segments 230, 232, 234, 236 and 238 are arranged in succession substantially defining a minimum closed line, the hinging axes are all arranged close to such a minimum closed line, and the clamping device 220 is clamped when applied to the tubular element;

A second configuration is an open configuration (figures 16, 19 and 22), wherein the removable fastener 40 is open and the clamping segments 230, 232, 234, 236 and 238 are arranged at least partially far from the minimum closed line, at least one of the hinging axes is far from the minimum closed line, and the clamping device 220 can be positioned around the tubular element.

A third configuration is an intermediate configuration (not illustrated in the figures but obvious from what has been described), wherein the removable fastener 40 is closed and the clamping segments 230, 232, 234, 236 and 238 are arranged at least partially far from the minimum closed line, at least one of the hinging axes is far from the minimum closed line, and the clamping device 220 is not clamped when applied to the tubular element.

In the clamped configuration of the clamping device 220, when the bicycle component is fixed to the tubular element of the bicycle, there is surface abutment of the clamping device 220 and of the rear surface 14 of the main body 12 at the tubular element.

In the clamped configuration of the clamping device 220, the clamping segment 234 is arranged at least partially juxtaposed over the clamping segment 232. In particular, the clamping segment 234 rests on the clamping segment 232.

The clamping segment 234 comprises an actuating end portion 234a.

The clamping segment 236 has adjustable length.

The clamping segment 236 comprises a screw/nut screw coupling between two parts thereof.

In particular, a perforated bush 260 is fixed to the clamping segment 234 at its intermediate area.

A threaded head of the first end of the clamping segment 236 is inserted through the perforated bush 260. A threaded nut in screwing engagement is adjustable on the threaded head so as to keep it engaged with the perforated bush 260.

The hinge 235 is arranged between the clamping segment 234 and the perforated bush 260.

The ways of using the clamping device 220 of the component 210 are clear from what has been described. In order to fix the component 210 to the tubular element of the bicycle, it is necessary to take the clamping device 220 into its open configuration and to arrange it around the tubular element so as to embrace it; at this point, it is possible to adjust the width of the clamping device 220, unscrewing or screwing in the threaded head of the clamping segment 236 in the bush 260; thereafter, the fastener 40 is closed (by fastening the hook 40a to the counter-hook 40b), reaching the intermediate configuration; finally, by acting on the end 234a of the clamping segment 234 in the direction to take the latter above and against the clamping segment 232, carrying the clamping segment 236 above it, the clamping condition is reached. At this point, the component 210 is locked on the tubular element of the bicycle in a secure and stable manner.

If it is then wished to dismount the component 210 from the tubular element of the bicycle, it is sufficient to carry out the previous operations in reverse.

As can be seen, both the mounting and the dismounting are simple and quick.

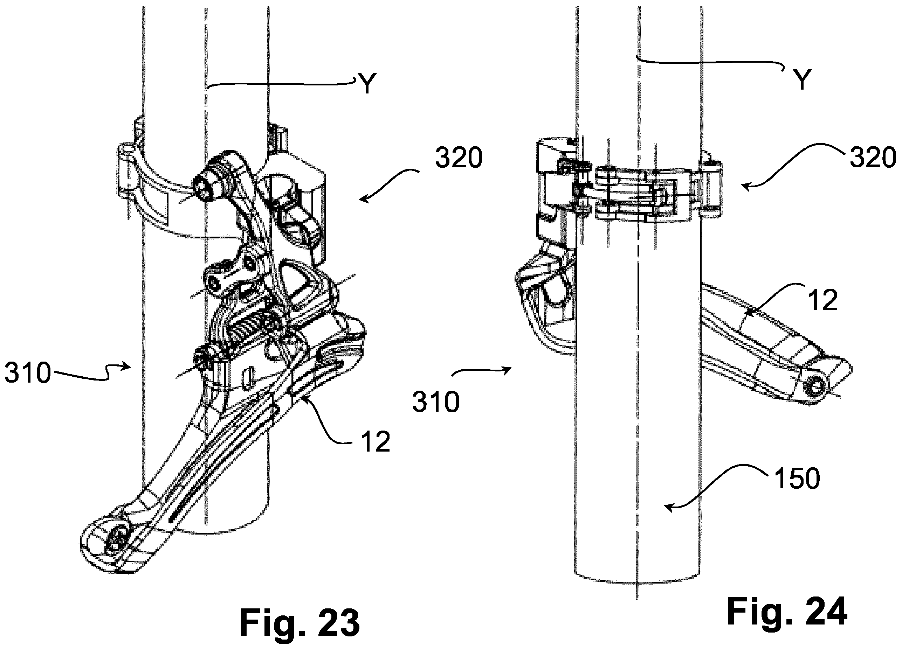

A second preferred embodiment of a bicycle derailleur 310 in accordance with the invention is illustrated in figures 23-28, in which elements structurally or functionally equivalent to those already described with reference to the first embodiment of the bicycle derailleur 110 of the invention of figures 8-14 are indicated with the same reference numeral.

In this preferred embodiment, the derailleur 310 is fixed to a tubular element 150 of the bicycle, in particular to the seat tube of the frame.

As illustrated in figures 23 and 24, the bicycle component 310 comprises a removable clamping device 320 for fixing to the tubular element 150.

The removable clamping device 320 comprises a plurality of clamping segments configured to be arranged around the entire circumference of the tubular element 150 and to be removably clamped on it.

The clamping segments are connected together in succession in pairs by connection systems, wherein the connection systems comprise hinges and a removable fastener 40.

The connection systems define hinging axes, parallel to one another along the direction Y according to which the tubular element 150 is arranged when the bicycle component 310 is fixed thereto; these axes comprise a stable hinging axis for every hinge and a virtual hinging axis for the removable fastener 40.

In particular, in this embodiment of the invention, there are five clamping segments, indicated with 330, 332, 334, 336 and 338, and there are four hinges, indicated with 331, 333, 335 and 337.

The clamping segment 330 is fixed to the main body 12 of the bicycle component, at an appendage portion 330b thereof, equipped with a hole 330c. The hole 330c is passed through by a fixing screw to the main body 12.

The clamping segment 330 extends for an arc between a first end portion and a second end portion opposite the first, a hook 40a that forms part of the removable fastener 40 being provided at the first end portion.

The clamping segment 332 extends for an arc between a first end portion and a second end portion opposite the first, provided at the opposite end portions with the hinges 331 and 333, respectively.

The clamping segment 334 extends between a first end portion and a second end portion opposite the first, and is connected to the clamping segment 332 through the hinge 333, arranged at the second end portion of the clamping segment 332 and at the first end portion of the clamping segment 334.

The clamping segment 336 extends for an arc between a first end portion and a second end portion opposite the first, and is connected to the clamping segment 334 through a hinge 335, arranged at an intermediate area of the clamping segment 334 and at the first end portion of the clamping segment 336.

The clamping segment 338 extends between a first end portion and a second end portion opposite the first, and is connected to the clamping segment 336 through a hinge 337, arranged at the second end portion of the clamping segment 336 and at the first end portion of the clamping segment 338. The clamping segment 238 is provided at the second end portion with a counter-hook 40b that forms part of the removable fastener 40.

The clamping device 320 is capable of taking up at least three configurations.

A first configuration is a clamped configuration (figures 23, 24, 25 and 27), wherein the removable fastener 40 is closed and the clamping segments 330, 332, 334, 336 and 338 are arranged in succession substantially defining a minimum closed line, the hinging axes are all arranged close to such a minimum closed line, and the clamping device 320 is clamped when applied to the tubular element;

A second configuration is an open configuration (not illustrated in the figures but clear from what has been described), wherein the removable fastener 40 is open and the clamping segments 330, 332, 334, 336 and 338 are arranged at least partially far from the minimum closed line, at least one of the hinging axes is far from the minimum closed line, and the clamping device 320 can be positioned around the tubular element.

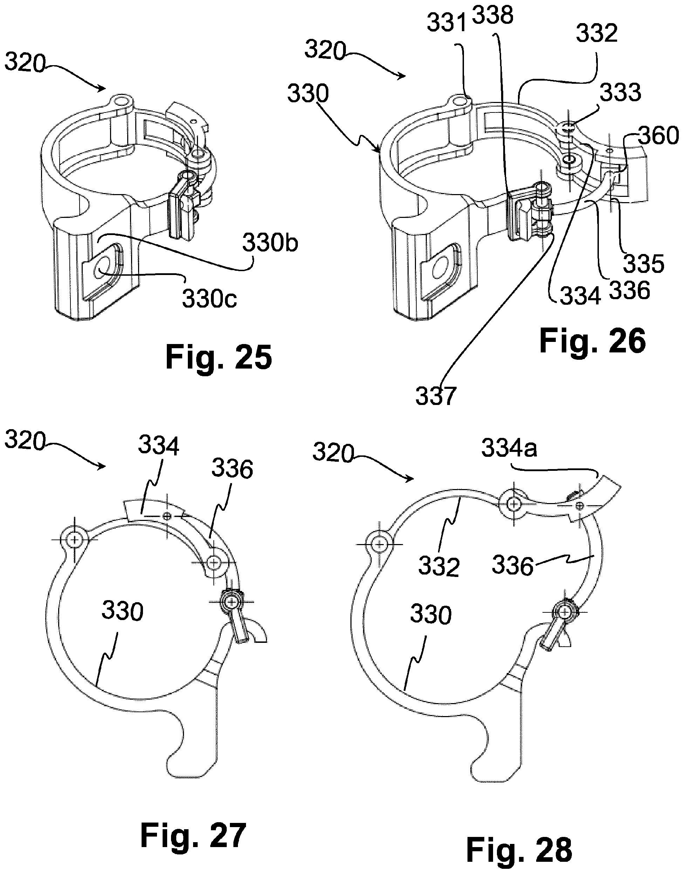

A third configuration is an intermediate configuration (figures 26 and 28), wherein the removable fastener 40 is closed and the clamping segments 330, 332, 334, 336 and 338 are arranged at least partially far from the minimum closed line, at least one of the hinging axes is far from the minimum closed line, and the clamping device 320 is not clamped when applied to the tubular element.

In the clamped configuration of the clamping device 220, the clamping segment 334 is arranged at least partially juxtaposed over the clamping segment 332. In particular, the clamping segment 334 is rested on the clamping segment 232.

The clamping segment 334 comprises an actuating end portion 334a.

The clamping segment 336 has adjustable length.

The clamping segment 336 comprises a screw/nut screw coupling between two parts thereof.

In particular, a perforated bush 360 is fixed to the clamping segment 334 at its intermediate area.

A threaded head of the first end of the clamping segment 336 is inserted through the perforated bush 360. A threaded nut in screwing engagement is adjustable on the threaded head so as to keep it engaged with the perforated bush 360.

The hinge 335 is arranged between the clamping segment 334 and the perforated bush 360.

The ways of using the clamping device 320 of the component 310 are clear from what has been described. In order to fix the component 310 to the tubular element of the bicycle, it is necessary to take the clamping device 320 into its open configuration and to arrange it around the tubular element so as to embrace it; at this point, it is possible to adjust the width of the clamping device 320, by unscrewing or screwing the threaded head of the clamping segment 336 in the bush 360; thereafter, the fastener 40 is closed (by fastening the hook 40a to the counter-hook 40b), reaching the intermediate configuration; finally, by acting on the end 334a of the clamping segment 334 in the direction to take the latter above and against the clamping segment 332, carrying the clamping segment 336 with it, the clamping condition is reached. At this point, the component 310 is locked on the tubular element of the bicycle in a secure and stable manner.

If it is then wished to dismount the component 310 from the tubular element of the bicycle, it is sufficient to carry out the previous operations in reverse.

As can be seen, both the mounting and the dismounting are simple and quick.

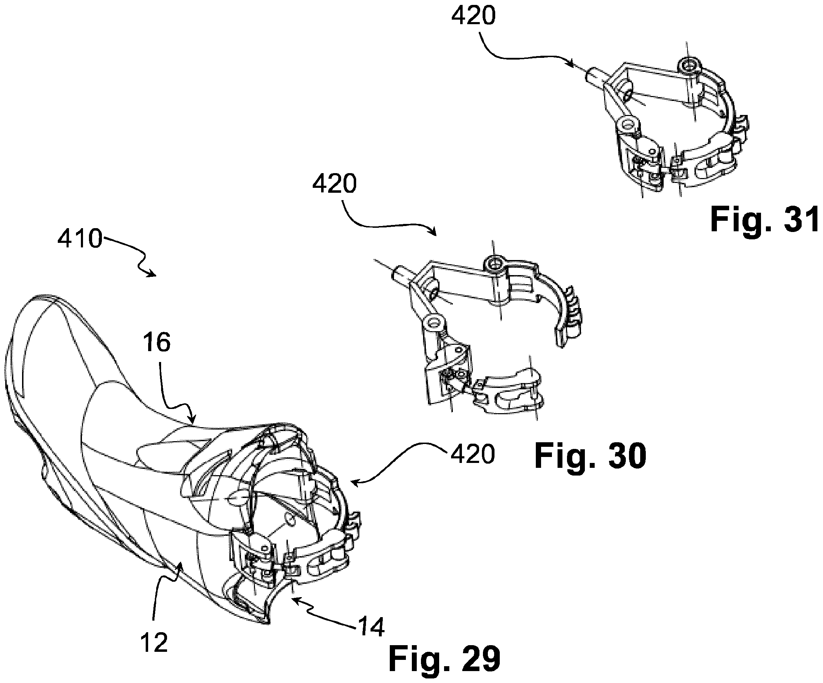

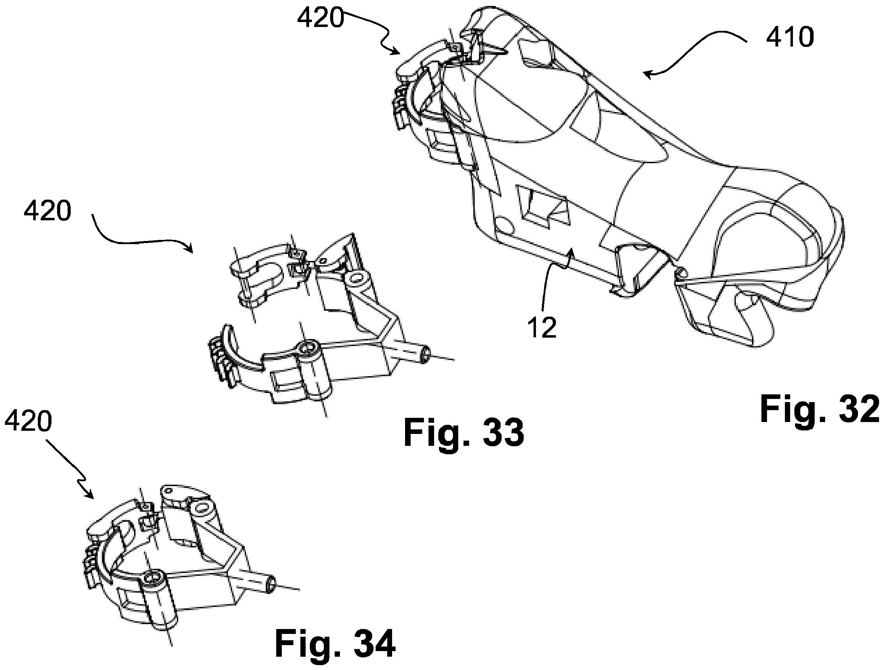

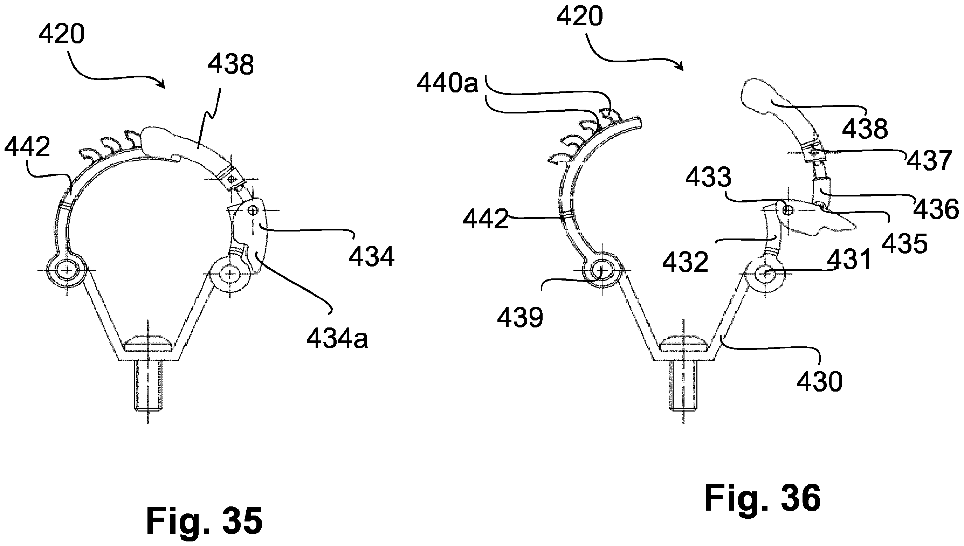

A third preferred embodiment of the control assembly of bicycle handlebars 410 in accordance with the invention is illustrated in figures 29-36, in which elements structurally or functionally equivalent to those already described with reference to the first embodiment of the control assembly of bicycle handlebars 10 of the invention of figures 15-22 are indicated with the same reference numeral.

As illustrated in figure 29, the bicycle component 410 comprises a removable clamping device 420 for fixing to the tubular element (not illustrated) of the bicycle.

A main body 12 of the bicycle component 410 has a rear surface 14 configured to be associated with the tubular element and an opposite front surface 16.

The removable clamping device 420 comprises a plurality of clamping segments configured to be arranged around the entire circumference of the tubular element of the bicycle and to be removably clamped on it.

The clamping segments are connected together in succession in pairs by connection systems, wherein the connection systems comprise hinges and a removable fastener 40.

The connection systems define hinging axes, parallel to one another along a direction according to which the tubular element is intended to be arranged when the bicycle component 410 is fixed thereto; the hinging axes comprise a stable hinging axis for every hinge and a virtual hinging axis for the removable fastener 40.

In particular, in this embodiment of the invention, there are six clamping segments, indicated with 430, 432, 434, 436, 438 and 442, and there are five hinges, indicated with 431, 433, 435, 437 and 439.

The clamping segment 430 is fixed to the main body 12 of the bicycle component, through a pin 30a that is preferably externally threaded, or through a screw screwed into an axial cavity of such a pin, without external threading. As an alternative to the threaded connection just described, the clamping segment 30 can be fixed to the main body 12 through overmolding.

The clamping segment 430 is substantially V-shaped, with a first end portion at which the hinge 431 is provided and a second opposite end portion at which the hinge 439 is provided.

The clamping segment 432 extends for an arc between a first end portion and a second end portion opposite the first, and is provided at the opposite end portions with the hinges 431 and 433, respectively.

The clamping segment 434 extends between a first end portion and a second end portion opposite the first, and is connected to the clamping segment 432 through the hinge 433, arranged at the second end portion of the clamping segment 432 and at the first end portion of the clamping segment 434.

The clamping segment 436 extends for an arc between a first end portion and a second end portion opposite the first, and is connected to the clamping segment 434 through a hinge 435, arranged at an intermediate area of the clamping segment 434 and at the first end portion of the clamping segment 436.

The clamping segment 238 extends between a first end portion and a second end portion opposite the first, and is connected to the clamping segment 436 through a hinge 437, arranged at the second end portion of the clamping segment 436 and at the first end portion of the clamping segment 438. The clamping segment 438 is provided at the second end portion with a counter-hook 40b that forms part of the removable fastener 40.

The clamping segment 442 extends for an arc between a first end portion and a second end portion opposite the first, and is provided at the first end portion with a series of hooks 440a that are part of the removable fastener 40. The clamping segment 442 is connected, at its second end portion, to the clamping segment 430 through the hinge 439.

The clamping device 420 is capable of taking up at least three configurations.

A first configuration is a clamped configuration (figures 29, 31, 32, 34 and 35), wherein the removable fastener 40 is closed and the clamping segments 430, 432, 434, 436, 438 and 442 are arranged in succession substantially defining a minimum closed line, the hinging axes are all arranged close to such a minimum closed line, and the clamping device 420 is clamped when applied to the tubular element.

A second configuration is an open configuration (figures 30, 33 and 36), wherein the removable fastener 40 is open and the clamping segments 430, 432, 434, 436, 438 and 442 are arranged at least partially far from the minimum closed line, at least one of the hinging axes is far from the minimum closed line, and the clamping device 420 can be positioned around the tubular element.

A third configuration is an intermediate configuration (not illustrated in the figures but clear from what has been described), wherein the removable fastener 40 is closed and the clamping segments 430, 432, 434, 436, 438 and 442 are arranged at least partially far from the minimum closed line, at least one of the hinging axes is far from the minimum closed line, and the clamping device 420 is not clamped when applied to the tubular element.

In the clamped configuration of the clamping device 420, when the bicycle component is fixed to the tubular element of the bicycle, there is surface abutment of the clamping device 420 and of the rear surface 14 of the main body 12 at the tubular element.

In the clamped configuration of the clamping device 420, the clamping segment 434 is arranged at least partially juxtaposed over the clamping segment 432. In particular, the clamping segment 434 rests on the clamping segment 432.

The clamping segment 434 comprises an actuating end portion 434a.

The clamping segment 436 has adjustable length.

The clamping segment 436 comprises a screw/nut screw coupling between two parts thereof.

The ways of using the clamping device 420 of the component 410 are clear from what has been described. In order to fix the component 410 to the tubular element of the bicycle, it is necessary to take the clamping device 420 into its open configuration and to arrange it around the tubular element so as to embrace it; at this point, the fastener 40 is closed (by fastening the counter-hook 40b to one of the hooks 440a), reaching the intermediate configuration; finally, by acting on the end 434a of the clamping segment 434 in the direction to take the latter above and against the clamping segment 432, carrying the clamping segment 436 with it, the clamping condition is reached. At this point, the component 410 is locked on the tubular element of the bicycle in a secure and stable manner. By suitably selecting the hook 440a, it is possible to fix the component 410 to tubular elements having a different diameter, within a range dependent on the number of hooks 440a.

If it is then wished to dismount the component 410 from the tubular element of the bicycle, it is sufficient to carry out the previous operations in reverse.

As can be seen, both the mounting and the dismounting are simple and quick.

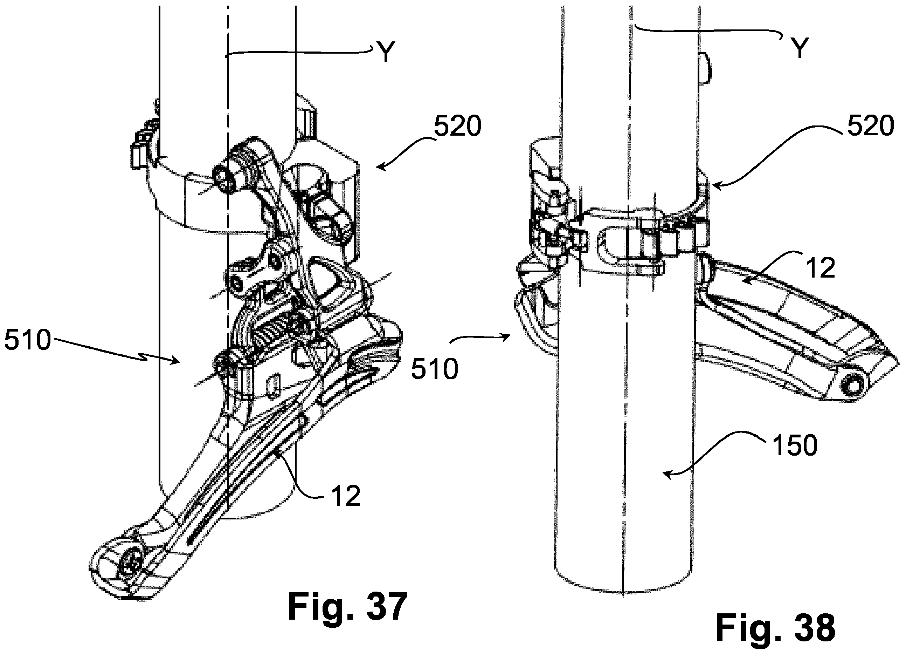

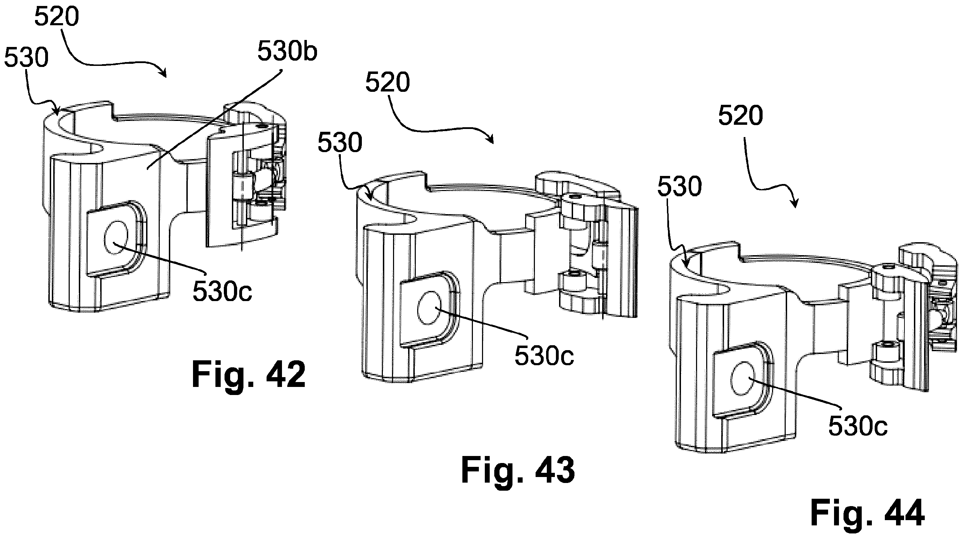

A third preferred embodiment of a bicycle derailleur 510 in accordance with the invention is illustrated in figures 37-44, in which elements structurally or functionally equivalent to those already described with reference to the first embodiment of the bicycle derailleur 110 of the invention of figures 23-28 are indicated with the same reference numeral.

In this preferred embodiment, the derailleur 510 is fixed to a tubular element 150 of the bicycle, in particular to the seat tube of the frame.

As illustrated in figures 37 and 38, the bicycle component 510 comprises a removable clamping device 520 for fixing to the tubular element 150.

The removable clamping device 520 comprises a plurality of clamping segments configured to be arranged around the entire circumference of the tubular element 150 and to be removably clamped onto it.

The clamping segments are connected together in succession in pairs by connection systems, wherein the connection systems comprise hinges and a removable fastener 40.

The connection systems define hinging axes, parallel to one another along the direction Y according to which the tubular element 150 is arranged when the bicycle component 510 is fixed thereto; these axes comprise a stable hinging axis for every hinge and a virtual hinging axis for the removable fastener 40.

In particular, in this embodiment of the invention, there are four clamping segments, indicated with 530, 532, 534 and 536, and there are three hinges, indicated with 331, 333 and 335.

The clamping segment 530 is fixed to the main body 12 of the bicycle component, at an appendage portion 530b thereof, equipped with a hole 530c. The hole 530c is passed through by a fixing screw to the main body 12.

The clamping segment 530 extends for an arc between a first end portion and a second end portion opposite the first. At the second end portion the hinge 531 is provided, whereas at the first end portion the clamping segment 530 is provided with a series of hooks 540a that are part of the removable fastener 40.

The clamping segment 532 extends for an arc between a first end portion and a second end portion opposite the first, and is provided at the opposite end portions with the hinges 531 and 533, respectively.

The clamping segment 534 extends for an arc between a first end portion and a second end portion opposite the first, and is connected to the clamping segment 532 through the hinge 533, arranged at an intermediate area of the clamping segment 532 and at the first end portion of the clamping segment 534.

The clamping segment 536 extends between a first end portion and a second end portion opposite the first, and is connected to the clamping segment 534 through the hinge 535, arranged at the second end portion of the clamping segment 534 and at the first end portion of the clamping segment 536. The clamping segment 536 is provided at the second end portion with a counter-hook 40b that forms part of the removable fastener 40.

The clamping device 520 is capable of taking up at least three configurations.

A first configuration is a clamped configuration (figures 37-39 and 42), wherein the removable fastener 40 is closed and the clamping segments 530, 532, 534 and 536 are arranged in succession substantially defining a minimum closed line, the hinging axes are all arranged close to such a minimum closed line, and the clamping device 520 is clamped when applied to the tubular element;

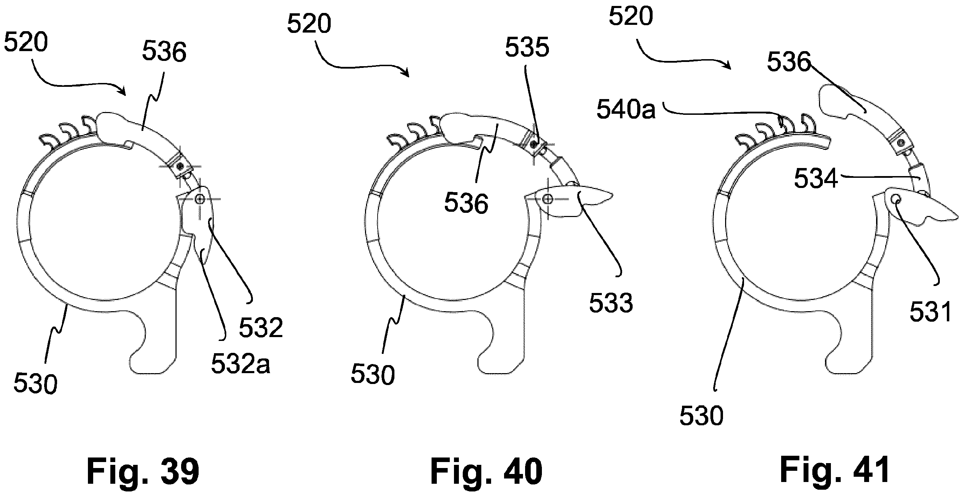

A second configuration is an open configuration (figures 40, 41, 43, 44), wherein the removable fastener 40 is open and the clamping segments 530, 532, 534 and 536 are arranged at least partially far from the minimum closed line, at least one of the hinging axes is far from the minimum closed line, and the clamping device 520 can be positioned around the tubular element.

A third configuration is an intermediate configuration (not illustrated in the figures but clear from what has been described), wherein the removable fastener 40 is closed and the clamping segments 530, 532, 534 and 536 are arranged at least partially far from the minimum closed line, at least one of the hinging axes is far from the minimum closed line, and the clamping device 520 is not clamped when applied to the tubular element.

In the clamped configuration of the clamping device 520, the clamping segment 532 is arranged at least partially juxtaposed over the clamping segment 530. In particular, the clamping segment 532 rests on the clamping segment 530.

The clamping segment 532 comprises an actuating end portion 532a.

The clamping segment 534 has adjustable length.

The clamping segment 534 comprises a screw/nut screw coupling between two parts thereof.

The ways of using the clamping device 520 of the component 510 are clear from what has been described. In order to fix the component 510 to the tubular element of the bicycle, it is necessary to take the clamping device 520 into its open configuration and arrange it around the tubular element so as to embrace it; at this point, the fastener 40 is closed (fastening the counter-hook 40b to one of the hooks 540a), reaching the intermediate configuration; finally, by acting on the end 532a of the clamping segment 532 in the direction to take the latter above and against the clamping segment 530, carrying the clamping segment 536 with it, the clamping condition is reached. At this point, the component 510 is locked on the tubular element of the bicycle in a secure and stable manner. By suitably selecting the hook 540a, it is possible to fix the component 510 to tubular elements having a different diameter, within a range dependent on the number of hooks 540a.

If it is then wished to dismount the component 510 from the tubular element of the bicycle, it is sufficient to carry out the previous operations in reverse.

As can be seen, both the mounting and the dismounting are simple and quick.

Of course, those skilled in the art can bring numerous modifications and variants to the present invention in order to satisfy specific and contingent requirements, all of which are in any case encompassed by the scope of protection defined by the following claims.

## Claims

1. Bicycle component (10, 110, 210, 310, 410, 510) comprising a main body (12) and a removable clamping device (20, 120, 220, 320, 420, 520) for fixing to a tubular element (150) of the bicycle, wherein the removable clamping device (20, 120, 220, 320, 420, 520) comprises a plurality of clamping segments (30, 32, 34, 36, 130, 132, 134, 230, 232, 234, 236, 238, 330, 332, 334, 336, 338, 430, 432, 434, 436, 438, 442, 530, 532, 534, 536) configured to be arranged around the entire circumference of the tubular element (150) of the bicycle and to be removably clamped on it, **characterized in that** there are at least three clamping segments (30, 32, 34, 36, 130, 132, 134, 230, 232, 234, 236, 238, 330, 332, 334, 336, 338, 430, 432, 434, 436, 438, 442, 530, 532, 534, 536), connected together in succession in pairs by at least three connection systems, wherein the connection systems comprise at least one hinge (31, 33, 35, 131, 133, 231, 233, 235, 237, 331, 333, 335, 337, 431, 433, 435, 437, 439, 531, 533, 535) and at least one removable fastener (40).

2. Bicycle component (10, 110, 210, 310, 410, 510) according to claim 1, wherein the connection systems define hinging axes, parallel to one another along a direction (Y) according to which the tubular element (150) is intended to be arranged when the bicycle component (10, 110) is fixed thereto, the hinging axes comprising a stable hinging axis for every hinge (31, 33, 35, 131, 133, 231, 233, 235, 237, 331, 333, 335, 337, 431, 433, 435, 437, 439, 531, 533, 535) and a virtual hinging axis for every removable fastener (40).

3. Bicycle component (10, 110, 210, 310, 410, 510) according to claim 2, wherein the clamping device (20, 120, 220, 320, 420, 520) is capable of taking up at least three configurations:
i) a clamped configuration, in which:
the removable fastener (40) is closed and the clamping segments (30, 32, 34, 36, 130, 132, 134, 230, 232, 234, 236, 238, 330, 332, 334, 336, 338, 430, 432, 434, 436, 438, 442, 530, 532, 534, 536) are arranged in succession substantially defining a minimum closed line,
the hinging axes are all arranged close to such a minimum closed line, and
the clamping device (20, 120, 220, 320, 420, 520) is clamped when applied to the tubular element (150);
ii) an open configuration, in which:
the removable fastener (40) is open and the clamping segments (30, 32, 34, 36, 130, 132, 134, 230, 232, 234, 236, 238, 330, 332, 334, 336, 338, 430, 432, 434, 436, 438, 442, 530, 532, 534, 536) are arranged at least partially far from the minimum closed line,
at least one of the hinging axes is far from the minimum closed line, and
the clamping device (20, 120, 220, 320, 420, 520) can be positioned around the tubular element (150);
iii) an intermediate configuration, in which:
the removable fastener (40) is closed and the clamping segments (30, 32, 34, 36, 130, 132, 134, 230, 232, 234, 236, 238, 330, 332, 334, 336, 338, 430, 432, 434, 436, 438, 442, 530, 532, 534, 536) are arranged at least partially far from the minimum closed line,
at least one of the hinging axes is far from the minimum closed line, and
the clamping device (20, 120, 220, 320, 420, 520) is not clamped when applied to the tubular element (150).

4. Bicycle component (10, 110, 210, 310, 410, 510) according to any of the previous claims, wherein - in a clamped configuration of the clamping device (20, 120, 220, 320, 420, 520), when the bicycle component (10, 110) is fixed to the tubular element (150) of the bicycle - there is surface abutment of the clamping device (20, 120, 220, 320, 420, 520) and of a rear surface (14) of the main body (12) at the tubular element (150).

5. Bicycle component (10, 110, 210, 310, 410, 510) according to any of the previous claims, wherein - in a clamped configuration of the clamping device (20, 120, 220, 320, 420, 520) - one (34, 132, 234, 334, 434, 532) of the clamping segments is arranged at least partially juxtaposed over an adjacent clamping segment (32, 130, 232, 332, 432, 530).

6. Bicycle component (10, 110, 210, 310, 410, 510) according to claim 5, wherein the clamping segment (34, 132, 234, 334, 434, 532) arranged at least partially juxtaposed is at least partially recessed in a seat (32a, 130a) formed in the adjacent clamping segment (32, 130, 232, 332, 432, 530).

7. Bicycle component (10, 110, 210, 310, 410, 510) according to any of claims 5 to 6, wherein the clamping segment (34, 132, 234, 334, 434, 532) arranged at least partially juxtaposed comprises an actuating end portion (234a, 334a, 434a, 532a) .

8. Bicycle component (10, 110, 210, 310, 410, 510) according to any of the previous claims, wherein at least one (30, 130, 230, 330, 430, 530) of the clamping segments is fixed to the main body (12) of the bicycle component (10, 110, 210, 310, 410, 510).

9. Bicycle component (410, 510) according to any of the previous claims, wherein one (442, 530) of the clamping segments has a fastening end portion comprising a plurality of hooks (440a, 540a) .

10. Bicycle component (110) according to claim 3, wherein there are three clamping segments (130, 132, 134), there are two hinges (131, 133) and there is at least one removable fastener (40), wherein:
a first (130) of the three clamping segments is fixed to the main body (12) of the bicycle component (110), extending for an arc between a first end and a second end opposite the first, provided at the first end with a hook (40a) part of the removable fastener (40);
a second (132) of the three clamping segments, extending between a first end and a second end opposite the first, connected to the first clamping segment (130) through a first (131) of the two hinges, arranged at the second end of the first clamping segment (130) and at the first end of the second clamping segment (132);
a third (134) of the three clamping segments, extending for an arc between a first end and a second end opposite the first, connected to the second clamping segment (132) through a second (133) of the two hinges, arranged at the second end of the second clamping segment (132) and at an intermediate area of the third clamping segment (134), and provided at the second end with a counter-hook (40b) part of the removable fastener (40).

11. Bicycle component (310) according to claim 3, wherein there are five clamping segments (330, 332, 334, 336, 338), there are at least three hinges (331, 333, 335, 337) and there is at least one removable fastener (40), wherein:
a first (330) of the five clamping segments is fixed to the main body (12) of the bicycle component (310), extending for an arc between a first end and a second end opposite the first, provided at the first end with a hook (40a) part of the removable fastener (40);
a second (332) of the five clamping segments, extending between a first end and a second end opposite the first, connected to the first clamping segment (330) through a first (331) of the at least three hinges, arranged at the second end of the first clamping segment (330) and at the first end of the second clamping segment (332);
a third (334) of the five clamping segments, extending for an arc between a first end and a second end opposite the first, connected to the second clamping segment (332) through a second (333) of the at least three hinges, arranged at the second end of the second clamping segment (332) and at the second end of the third clamping segment (334);
a fourth (336) of the five clamping segments, extending for an arc between a first end and a second end opposite the first, connected to the third clamping segment (334) at an intermediate area of the third clamping segment (334);
a fifth (338) of the five clamping segments, extending between a first end and a second end opposite the first, connected to the fourth clamping segment (336) through a third (337) of the at least three hinges, arranged at the second end of the fourth clamping segment (336) and at the first end of the fifth clamping segment (338), and provided at the second end with a counter-hook (40b) part of the removable fastener (40).

12. Bicycle component (310) according to claim 11, wherein the at least three hinges comprise a fourth hinge (335), between the third (334) and the fourth clamping segment (336).

13. Bicycle component (310) according to claim 11 or 12, comprising:
a perforated bush (360) fixed to the third clamping segment (334) at its intermediate area;
a threaded head of the first end of the fourth clamping segment (336), inserted through the perforated bush;
a threaded nut in adjustable screwing engagement on the threaded head so as to keep it engaged with the perforated bush (360) .

14. Bicycle component (510) according to claim 3, wherein there are four clamping segments (530, 532, 534, 536), there are at least three hinges (531, 533, 535) and there is at least one removable fastener (40), wherein:
a first (530) of the four clamping segments is fixed to the main body (12) of the bicycle component (510), extending for an arc between a first end and a second end opposite the first, provided at the first end with a series of hooks (540a) part of the removable fastener (40);
a second (532) of the four clamping segments, extending between a first end and a second end opposite the first, connected to the first clamping segment (530) through a first (531) of the three hinges, arranged at the second end of the first clamping segment (530) and at the second end of the second clamping segment (532);
a third (534) of the four clamping segments, extending for an arc between a first end and a second end opposite the first, connected to the second clamping segment (532) through a second (533) of the at least three hinges, arranged at the second end of the third clamping segment (534) and at an intermediate area of the second clamping segment (532);
a fourth (536) of the four clamping segments, extending for an arc between a first end and a second end opposite the first, connected to the third clamping segment (534) through a third (535) of the three hinges, arranged at the second end of the third clamping segment (534) and at the first end of the fourth clamping segment (536), and provided at the second end of a counter-hook (40b) part of the removable fastener (40).

15. Bicycle component (10, 110, 210, 310, 410, 510) according to any of the previous claims, wherein the component is a control assembly of bicycle handlebars (10) or the component is a derailleur (110).
